# EUROPEAN PATENT SPECIFICATION

(11) **EP 2 895 569 B1**
(45) Date of publication and mention of the grant of the patent: **25.10.2017**
(21) Application number: 13836956.6
(22) Date of filing: 16.08.2013
(51) Int. Cl.: C09D 123/10, C09D 7/12, C08J 5/18, C09J 7/00, C09J 4/06, C09J 123/08, C08L 23/08, C08K 5/01

(54) **ADHESIVE COMPOSITIONS AND USE THEREOF**
KLEBSTOFFZUSAMMENSETZUNGEN UND IHRE VERWENDUNG
COMPOSITIONS ADHÉSIVES ET LEUR UTILISATION

(30) Priority: 14.09.2012 US 201213617440
(43) Date of publication of application: 22.07.2015
(73) Proprietor: Henkel IP & Holding GmbH, 40589 Düsseldorf (DE)
(72) Inventor: CHEUNG, Chuiwah Alice, Hillsborough, New Jersey 08844 (US); HAYES, Patrick James, Ringoes, New Jersey 08551 (US); BELMUDES, Stephane, Bernardsville, New Jersey 07924 (US)
(74) Representative: Viering, Jentschura & Partner mbB Patent- und Rechtsanwälte
(86) International application number: PCT/US2013/055272
(87) International publication number: WO 2014/042815

(56) References cited:
- WO-A2-2011/014714
- US-A1- 2004 023 054
- US-A1- 2004 249 046
- US-A1- 2007 129 498
- US-B1- 6 319 979
- US-B1- 6 822 029
- US-B1- 7 378 481

## Description

### FIELD OF THE INVENTION

The present invention relates to hot melt adhesives with wide service temperature ranges, making these adhesives particularly well suited for case and carton sealing applications that are exposed to extreme temperatures.

### BACKGROUND OF THE INVENTION

Hot melt adhesives are applied to a substrate while in a molten state and cooled to harden the adhesive layer. The use of hot melt adhesives is widely used in packaging industry to seal containers, e.g. cardboard cases, trays and cartons. US6,319,979B1 discloses such hot melt adhesives comprising at least one linear or substantially linear ethylene copolymer, a tackifying resin and a wax. Many types of packaging applications require the use of an adhesive that is both heat resistant and cold tolerant. However, conventional hot melt adhesives exhibit strong bond strength at either the high or the low end temperatures, but not both. Polypropylene based systems have been utilized to improve heat resistance, but polypropylenes provide inadequate cold resistance because they become brittle at around 0°C. During transportation and storage, and depending on the season and location, the sealed containers are exposed to temperatures of from about -28.9 °C (-20°F) to about 60°C (140°F). Hence, there is a need for versatile hot melt adhesives with both good heat and cold resistances. The current invention addresses this need.

### BRIEF SUMMARY OF THE INEVENTION

The invention provides a hot melt adhesive with wide service temperature ranges, methods of using the adhesive to bond substrates together, to close/seal cases and cartons and the like, and to articles of manufacture comprising the adhesive.
One aspect of the invention provides a hot melt adhesive comprising:
a) a metallocene catalyzed polyethylene copolymer, wherein the metallocene catalyzed polyethylene copolymer is an ethylene-octene copolymer with a melt index of 200 to 2000 g/10 min at 190°C, 2.16kg, measured in accordance with ASTM D1238;
b) 0.5 to 8 wt% of a functionalized metallocene catalyzed polyethylene copolymer, wherein the functional group is selected from acrylic acid, acetate, sulfonate, maleic anhydride, fumaric acid and citraconic anhydride; and wherein the melt index ranges from 200 to 2,000 g/10 min at 190°C, 2.16kg, measured in accordance with ASTM D1238;
c) greater than 22 wt% of a wax with a melting point ranging from 48.9 °C (120°F) to 121.1 °C (250°F), measured with a DSC; and
d) a tackifier with a Ring and Ball softening point of 80°C to 110°C
wherein the wt% is based on the total weight of the adhesive. The resultant hot melt adhesive has both good heat resistance and cold resistance performances. Preferred embodiments are set out in the dependent claims.

Another aspect of the invention provides a method of sealing and/or making or forming a case, a carton, a tray, a box or a bag comprising the specific hot melt adhesive of the present invention.

Yet another aspect of the invention is directed to an article of manufacture comprising the hot melt adhesive according to the present invention. The article of manufacture is a carton, case, tray or bag used for packaging products. The article may comprise cardboard, paperboard or other substrate that has been adhered by such hot melt adhesives. In another embodiment, the adhesive is pre-applied to the article, e.g., carton, case, tray or bag during the manufacture thereof, and prior to packaging of a product.

The invention also provides a process for bonding a substrate to a similar or dissimilar substrate comprising applying to at least one substrate a molten hot melt adhesive composition and bonding said substrates together as set out in the claims..

### DETAILED DESCRIPTION OF THE INVENTION

Weight percent (wt %) are calculated based on the total weight of the adhesive, unless otherwise noted.

The use of a wide service temperature range hot melt adhesives have high heat resistance and good cold resistance is important in when packaged goods are transported and/or stored under conditions where exposure to extreme temperatures is likely.

Conventionally, metallocene catalyzed polypropylene has been used to improve heat resistance in hot melt adhesives; and metallocene catalyzed polyethylene has been used to improve cold resistance in hot melt adhesives. Generally, high softening point tackifiers and less than 20 wt% of high melting point waxes are formulated with the metallocene catalyzed polyethylene copolymer to impart high heat resistance; however, this can lead to poor low temperature performances. Conversely, low softening point tackifiers and low melting point waxes are combined with the polymer to impart good low temperature performance; however, the resultant adhesive has poor high temperature performances.

It has been discovered that hot melt adhesives having an excellent balance of high and low temperature performance can be obtained using a combination of metallocene catalyzed polyethylene copolymer and a low level of functionalized metallocene catalyzed copolymer. A hot melt adhesive composition comprising metallocene catalyzed polyethylene copolymer and less than 10 wt% of a functionalized metallocene catalyzed polyethylene copolymer, as the base adhesive polymer, extends the hot and cold temperature performances of the adhesives, regardless of the softening temperatures of the tackifiers and melting point of the waxes.

Metallocene catalyzed polyethylene are obtained through polymerizing ethylene monomer with alpha-olefin (e.g. butene, hexene, octene) using metallocene catalytic system. Metallocene catalyzed polyethylene copolymers are commercially available from Exxon Mobil Corporation (under the trade name Exact) or Dow Chemical (under the trade name Affinity polymer). Metallocene catalysts are known as single site catalysts. These catalysts have only one reactive site and can produce copolymers of ethylene and other alpha-olefins that have only short chain branches, thereby forming an essentially linear copolymer having a very narrow molecular weight distribution. The catalyst also provides excellent uniform comonomer incorporation into the polymer chain. However, it is the ethylene copolymer itself, not the method of producing the ethylene copolymer, that is critical to the present adhesive. A polymer catalyzed by a single-site metallocene catalyst has a very narrow molecular weight distribution, having a polydispersity index of less than about 2.5. This is distinguishable from a polymer catalyzed by a multi-site Ziegler type catalyst which typically has polydispersity index of about 3 to 6, and a polymer catalyzed by a peroxide catalyst which typically has a polydispersity index of about 2.8 to 4.6. The metallocene catalyzed polyethylene of the invention has a very narrow molecular weight distribution with a polydispersity index of less than 2.5, preferably less than 2.3, more preferably 2.0 or less. The polydispersity index is calculated as the weight average molecular weight (MW), as measured by gel permeation chromatography, divided by the number average molecular weight (MN), as also measured by gel permeation chromatography.

The other comonomer present in the metallocene catalyzed polyethylene copolymer has 3 to 12 carbons. 1-butene, 1-hexene and 1-ocetene are the most preferred comonomers. The amount of the other comonomer in the ethylene copolymer varies from about 8 to 30 weight percent. The amount of this other alpha olefin is preferably about 15 to 25 weight percent, with a weight percent of about 21 to 23 being most preferred.

The metallocene catalyzed polyethylenes have a melt index ranging from 200 to 2,000g/10 min, 190°C, 2.16kg, preferably from about 500 to about 1750cP, measured in accordance with ASTM D1238. Useful metallocene catalyzed polyethylene include ethylene copolymers with a 20% crystallinity and a Brookfield viscosity of 13,000 cP at 176.7 °C (350°F).

The metallocene polyethylene copolymer will typically be used in amounts of from 20 wt % to 60 wt %, more preferably from 25 wt % to 50 wt % as the base adhesive polymer component.

A functional group is grafted onto a metallocene polyethylene copolymer to form a functionalized metallocene catalyzed polyethylene copolymer. This process may be performed by mixing metallocene catalyzed polyethylene copolymer with a functionalizing component in a reactor or in an extruder. A skilled artisan understands that various functional group may be reacted with metallocene catalyzed polyethylene copolymer to result in a functionalized metallocene catalyzed polyethylene copolymer. Functional groups used in the practice of the invention are acrylic acid, acetate, sulfonate, maleic anhydride, fumaric acid, and citraconic anhydride. Useful functionalized metallocene catalyzed polyethylene copolymer for the adhesives include, acrylic acid functionalized metallocene catalyzed polyethylene copolymer, acetate functionalized metallocene catalyzed polyethylene copolymer, sulfonate functionalized metallocene catalyzed polyethylene copolymer, and maleic anhydride functionalized metallocene catalyzed polyethylene copolymer. In one embodiment, the functionalized metallocene catalyzed polyethylene copolymer is a maleic anhydride modified metallocene catalyzed polyethylene copolymer. In another embodiment, the functionalized metallocene catalyzed polyethylene copolymer is a fumaric acid modified metallocene catalyzed polyethylene copolymer. In a further embodiment, the functionalized metallocene catalyzed polyethylene copolymer is a citraconic anhydride modified metallocene catalyzed polyethylene copolymer.

The functional groups in the functionalized metallocene catalyzed ethylene copolymer are typically distributed randomly throughout the copolymer. Particularly preferred embodiments of the adhesive of the invention will comprise a functionalized metallocene catalyzed polyethylene copolymer comprising from about 0.3 to about 8 wt %, more particularly about 0.5 to about 5 wt %, of the functional group, based on the weight of the metallocene polyethylene catalyzed copolymer.

Functionalized metallocene catalyzed polyethylene copolymer suitable for the invention will have molecular weight greater than 2,000 g/mol (Daltons). The functionalized metallocene catalyzed polyethylene copolymer is different than a functionalized modified wax. A skilled artisan understands that functionalized modified wax typically has molecular weight less than 2,000 g/mol (Daltons), whereas the copolymers have a molecular weight greater than 2,000 g/mol (Daltons). The crystallinity of the functionalized ethylene copolymer preferably ranges from 10 to 30%. The viscosity of the functionalized metallocene catalyzed polyethylene copolymer preferably ranges from 10,000cP to 20,000 cP at 176.7 °C (350°F). The functionalized metallocene catalyzed polyethylenes have a melt index ranging from 200 to 2,000 g/10 min, 190°C, 2.16kg, preferably from about 500 to about 1750, measured in accordance with ASTM D1238. One exemplary functionalized metallocene catalyzed polyethylene is AFFINITY™ GA 1000R from Dow®.

The functionalized metallocene polyethylene copolymer is used in amounts of from 0.5 wt % to 8 wt %, preferably from about 1 wt % to about 8 wt %, or about 7 wt%, or about 6 wt%, or about 5 wt% of the adhesive. The use of more than 10 wt% may lead to phase separations and incompatibility with the other components of the adhesive.

The adhesive compositions of this invention are tackified. The tackifier component will usually be present in an amount of from 10 wt % to 60 wt %, more preferably from 20 wt % to 50 wt %, even more preferably from 20 wt % to 45 wt %. The tackifying resins typically will have Ring and Ball softening points, as determined by ASTM method E28, of between 80°C and 110°C, and more typically even lower than 100°C, 99°C, 98°C, 97°C, 96°C, and 95°C. Mixtures of two or more tackifying resins may be desirable for some formulations.

In some embodiments, the tackifiers are synthetic hydrocarbon resins. Included synthetic hydrocarbon resins are aliphatic or cycloaliphatic hydrocarbons, aromatic hydrocarbons, aromatically modified aliphatic or cycloaliphatic hydrocarbons and mixtures thereof. Also included are hydrogenated versions of the above mentioned synthetic hydrocarbon resins.

Non-limiting examples include aliphatic olefin derived resins such as those available from Cray Valley under the trade name Wingtack™ Extra and the Escorez™ 2203L series from Exxon. A common C5 hydrocarbon derived tackifier resin in this class is a diene-olefin copolymer of piperylene and 2-methyl-2-butene having a softening point of above 80°C. This resin is available commercially under the trade name Wingtack 95.

Also useful are C9 aromatic modified C5 hydrocarbon derived tackifiers. Such tackifiers are available from Sartomer and Cray Valley under the trade name Norsolene and from Rutgers series of TK aromatic hydrocarbon resins. Norsolene M1090 is a low molecular weight thermoplastic hydrocarbon polymer having a Ring and Ball softening point of 95-110 °C. and is commercially available from Cray Valley.

Waxes suitable for use in the present invention include paraffin waxes, microcrystalline waxes, polyethylene waxes, polypropylene waxes, by-product polyethylene waxes, and Fischer-Tropsch waxes. High density low molecular weight polyethylene waxes, by-product polyethylene waxes and Fischer-Tropsch waxes are conventionally referred to in the art as synthetic high melting point waxes. Callista® 122, 158, 144, 435, and 152 available from Shell Lubricants, Houston, Tex.; Paraflint® C-80 and Paraflint® H-1, H-4 and H-8, Fischer-Tropsch waxes available from Sasol-SA/Moore&Munger, Shelton, Conn. are also preferred waxes for use in the practice of the invention.

Paraffin waxes that can be used in the practice of the invention include Pacemaker® 30, 32, 35, 37, 40, 42, 45 & 53 available from Citgo Petroleum, Co., Houston, Tex.; Okerin® 236 TP available from Astor Wax Corporation, Doraville, Ga.; Penreco® 4913 available from Pennzoil Products Co., Houston, Tex.; R-7152 Paraffin Wax available from Moore & Munger, Shelton, Conn.; and Paraffin Wax 1297 available from International Waxes, Ltd. in Ontario, Canada; R-2540 available from Moore and Munger; and other paraffinic waxes such as those available from CP Hall under the product designations 1230, 1236, 1240, 1245, 1246, 1255, 1260, & 1262, available from CP Hall (Stow, Ohio).

The microcrystalline waxes useful here are those having 50 percent by weight or more cyclo or branched alkanes with a length of between 30 and 100 carbons. They are generally less crystalline than paraffin and polyethylene waxes, and have melting points of greater than about 70°C. Examples include Victory® Amber Wax, a 70°C melting point wax available from Petrolite Corp. located in Tulsa, Okla.; Bareco® ES-796 Amber Wax, a 70°C melt point wax available from Bareco in Chicago, Ill.; Okerin® 177, an 80°C melt point wax available from Astor Wax Corp.; Besquare® 175 and 195 Amber Waxes and 80 °C and 90°C melt point microcrystalline waxes both available from Petrolite Corp. in Tulsa, Okla.; Indramic® 91, a 90°C melt point wax available from Industrial Raw Materials located in Smethport, Pa.; and Petrowax® 9508 Light, a 90°C melt point wax available from Petrowax Pa., Inc. located in New York, N.Y.

Exemplary high density low molecular weight polyethylene waxes falling within this category include ethylene homopolymers available from Petrolite, Inc. (Tulsa, Okla.) as Polywax 500, Polywax™1500 and Polywax™ 2000. Polywax™ 2000 has a molecular weight of approximately 2000, an Mw/Mn of approximately 1.0, a density at 16°C of about 0.97 g/cm³ and a melting point of approximately 126°C.

Wax will be present in the formulations of the adhesive in amounts greater than 22 wt%, preferably greater than 23 wt%, 24 wt%, and most preferably greater than 25 wt% to 40 wt %, based on the total weight of the adhesive. It is widely understood that large amounts of waxes, typically greater than 20wt% negatively impacts the low temperature resistance of the adhesives. Surprisingly, the use of greater than 20 wt% of wax in the adhesive improves the low temperature resistance of an adhesive formed with a metallocene catalyzed polyethylene copolymer and a functionalized metallocene catalyzed polyethylene copolymer.

The waxes have a melt temperature between 48.9°C (120°F) and 121.1 °C (250°F), preferably between 65.6 °C (150°F) and 110 °C (230°F), and most preferable between 82.2 °C (180°F) and 104.4 °C (220°F). The melting temperature of the wax can be measured by various means known in the art, but melting temperature values as reported herein are determined by a DSC: the wax was heated at a rate of 10°C/min to about 20°C above its melting temperature and held isotherm for at about 3 minutes, then quench to -50°C at a rate of 100°C/min and then heated again at a rate of 10°C/min, and the highest peak of the second heating curve of the DSC was deemed as the DSC melting temperature.

It will be appreciated that other polymeric additives may, if desired, be added to the adhesive formulation. The adhesives of the present invention may also contain a stabilizer or antioxidant. These compounds are added to protect the adhesive from degradation caused by reaction with oxygen induced by such things as heat, light, or residual catalyst from the raw materials such as the tackifying resin. Among the applicable stabilizers or antioxidants included herein are high molecular weight hindered phenols and multifunctional phenols such as sulfur and phosphorous-containing phenol. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis (2,6-tert-butyl-phenol); 4,4'-thiobis (6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-di-tert-butyl-4-hydroxy-phenyl)-propionate].

The performance of these antioxidants may be further enhanced by utilizing, in conjunction therewith, known synergists such as, for example, thiodipropionate esters and phosphites. Distearylthiodipropionate is particularly useful. These stabilizers, if used, are generally present in amounts of about 0.1 to 1.5 weight percent, preferably 0.25 to 1.0 weight percent.

Such antioxidants are commercially available from BASF and include Irganox® 565, 1010 and 1076 which are hindered phenols. These are primary antioxidants which act as radical scavengers and may be used alone or in combination with other antioxidants such as phosphite antioxidants like Irgafos® 168 available from BASF. Phosphite catalysts are considered secondary catalysts and are not generally used alone. These are primarily used as peroxide decomposers. Other available catalysts are Cyanox® LTDP available from Cytec Industries in Stamford, Conn., and Ethanox® 1330 available from Albemarle Corp. in Baton Rouge, La. Many such antioxidants are available either to be used alone or in combination with other such antioxidants. These compounds are added to the hot melts in small amounts and have no effect on other physical properties. Other compounds that could be added that also do not affect physical properties are pigments which add color, or fluorescing agents, to mention only a couple. Additives like these are known to those skilled in the art. Depending on the contemplated end uses of the adhesives, other additives such as plasticizers, pigments, dyestuffs and fillers conventionally added to hot melt adhesives may be included. In addition, small amounts of additional tackifiers and/or waxes such as microcrystalline waxes, hydrogenated castor oil and vinyl acetate modified synthetic waxes may also be incorporated in minor amounts, i.e., up to about 10% by weight, into the formulations of the present invention.

The adhesive compositions of the present invention are prepared by blending the components in the melt at a temperature of above about 135 °C (275°F), typically at about 148.9 °C (300°F) until a homogeneous blend is obtained. Various methods of blending are known in the art and any method that produces a homogeneous blend is satisfactory. For example, a Cowles stirrer provides effective mixing for preparing these compositions.

The adhesive compositions of the present invention typically have a viscosity range of about 500 cP (centipoise) to about 1500 cP at 176.7 °C (350°F).

The hot melt adhesives of the present invention are particularly useful in case sealing applications where exceptionally high heat resistance in addition to cold resistance is important, i.e., in hot filled packaging applications; e.g. sealing and closing operations for cartons, cases, or trays used in packaging molten cheese, ice creams, yogurt or freshly baked goods which are subsequently subjected to refrigeration or freezing, and for corrugated cases, which are often subjected to high stresses and adverse environmental conditions during shipping and storage.

Typically, high melting point waxes and/or high softening point tackifiers are commonly used to boost high temperature performance of the adhesive; however, adhesion of the adhesive at low temperature suffers. Conversely, the use of low melting point waxes and/or low softening point tackifiers are often used to improve the low temperature adhesion performance of the adhesive; however, adhesion suffers at high temperatures. High temperature adhesion was measured at 54.4 °C (130°F) and above and low temperature adhesion was measured at -17.8 °C (0°F) and below. The adhesive of the present invention, with the addition of less than 10 wt% functionalize metallocene catalyzed polyethylene improves both high and low temperature adhesion of the adhesive, regardless of the melting and softening temperatures of tackifiers and waxes. The adhesive of the present invention surprisingly extends the service temperature range into both the low and high temperatures. The adhesive widens the temperature range of the hot melt adhesive from about -28.9 °C (-20°F) to about 60.0 °C (140°F). Such novel hot melt adhesive offer versatility for packaging application for it streamline the adhesives to fewer type of adhesive while providing the performance requirement of extreme service temperature ranges.

The hot melt adhesives of the invention also find use in packaging, converting, cigarette manufacture, bookbinding, bag ending and in nonwoven markets. The adhesives find particular use as case, carton, and tray forming adhesives, and as sealing adhesives, including heat sealing applications, for example in the packaging of cereals, cracker and beer products. Encompassed by the invention are containers, e.g., cartons, cases, boxes, bags, trays and the like, wherein the adhesive is applied by the manufacturer thereof prior to shipment to the packager. Following packaging, the container is heat sealed. The adhesive is also particularly useful in the manufacture of nonwoven articles. The adhesives may be used as construction adhesives, as positioning adhesives, and in elastic attachment applications in the manufacture of, e.g., diapers, feminine hygiene pads (which include conventional sanitary napkins and panty liners) and the like.

The substrates to be bonded include virgin and recycled kraft, high and low density kraft, chipboard and various types of treated and coated kraft and chipboard. Composite materials are also used for packaging applications such as for the packaging of alcoholic beverages. These composite materials may include chipboard laminated to an aluminum foil which is further laminated to film materials such as polyethylene, mylar, polypropylene, polyvinylidene chloride, ethylene vinyl acetate and various other types of films. Additionally, these film materials also may be bonded directly to chipboard or kraft. The aforementioned substrates by no means represent an exhaustive list, as a tremendous variety of substrates, especially composite materials, find utility in the packaging industry.

Hot melt adhesives for packaging are generally extruded in bead form onto a substrate using piston pump or gear pump extrusion equipment. Hot melt application equipment is available from several suppliers including Nordson, ITW and Slautterback. Wheel applicators are also commonly used for applying hot melt adhesives, but are used less frequently than extrusion equipment.

### Examples

The following examples are provided for illustrative purposes only. All parts in the formulation are by weight.

All examples were formulated by combining the components listed in Table 1 in a metal vessel and mixing with a stainless steel mixing blade at 176.7 °C (350°F) until homogeneous adhesive mixtures was formed.

The adhesives were then applied with a compressed bead width of 12.7 mm (½") between two kraft paper substrates at the designated application temperatures.

Cloud point of an adhesive is measured as the temperature at which the adhesive begins to solidify. It was measured as follows. The adhesive was heated to its specified application temperature. A thermometer was immersed into the adhesive and allowed to equilibrate. The thermometer was then removed and immediately twirled to retain a blob of adhesive on the bulb of the thermometer. The cloud point was recorded as the temperature at which the blob started to turn cloudy.

The viscosity was measured at 176.7 °C (350°F) with a Brookfield viscometer with spindle #27.

Heat stress is defined as being the temperature at which a stressed bond fails. Heat stress test was conducted by forming a composite construction of adhesive (12.7 mm (½") compressed) between two pieces of corrugated paperboard of specific dimensions. At least three test samples were prepared. The test samples were conditioned at room temperature for 24 hours. The adhesive bead forming this composite was then placed under approximately 100 grams of cantilever stress for 24 hours at specific temperatures. The highest temperature at which the adhesive passed the heat stress was recorded

Fiber tear test was determined as follows. A 12.7 mm (½") wide bead of adhesive was applied at specified application temperature to a 50.8 mm x 76.2 mm (2"×3") piece of double fluted corrugate board, and was immediately brought in contact with a second piece of corrugated to form a bond. A 200 gram weight was immediately placed on the top of the bond for 10 seconds to provide compression. The specimens prepared were conditioned at room temperature for 24 hours and further conditioned at specified temperatures for 24 hours. The bonds were separated by hand and the resulting fiber tear was recorded (higher values indicated better adhesion). Fiber tear was calculated as the amount of fiber left on the surface of the adhesive, which indicates failure within the substrate and not at the interface between the adhesive and the substrate. Three specimens were tested to obtain the average percent fiber tear.

**Table 1.**

| | Comp Ex A (wt%) | Comp Ex B (wt%) | Ex 1 (wt%) |
|---|---|---|---|
| Metallocene Polyethylene (MI 500-1000 g/10 min @ 190°C, 2.16kg, ASTM D1238) | 35 | 34.1 | 29.1 |
| AFFINITY™ GA 1000R | 0 | 0 | 5 |
| Hydrocarbon tackifier 95°C (Ring and Ball SP) | | 40 | 40 |
| Hydrocarbon tackifier at or above 130°C (Ring and Ball SP) | 44.1 | | |
| Wax or mixture of waxes (DSC melting point ranging from 65.6 °C to 121.1 °C (150°F to 250°F)) | 20 | 25 | 25 |
| Antioxidants | 0.9 | 0.9 | 0.9 |
| Total | 100 | 100 | 100 |
| | | | |
| Properties | Comp Ex A (wt%) | Comp Ex B (wt%) | Ex 1 (wt%) |
| Cloudy Point °C (°F) | 121.1 (250) | 140.6 (285) | 137.8 (280) |
| Viscosity at 176.7 °C (350°F) (cP) | 810 | 585 | 520 |
| | | | |
| Heat Stress | 60 °C (140°F) | 54.4 °C (130°F) | 60 °C (140°F) |
| | | | |
| Average Fiber Tear at Specific Temperatures | | | |
| 60 °C (140°F) | 56 | not measured | 68 |
| 57.2 °C (135°F) | 94 | 72 | 90 |
| 54.4 °C (130°F) | not measured | 84 | not measured |
| -6.7 °C (20°F) | 90 | 52 | 81 |
| -17.8 °C (0°F) | 88 | 48 ** | 88 |
| -28.9 °C (-20°F) | 77 * | 25 ** | 88 |

| | | | |
|---|---|---|---|
| * **slight crack was observed in the adhesive upon breaking the bond.** ** **cold crack was observed in the adhesive upon breaking the bond.** | | | |

The adhesive of Comparative Example 1, with high softening point tackifiers and high melting point waxes, exhibited strong bond strength at high temperatures (57.2 °C (135°F) and above); however, the adhesion was poor at low temperature. On the other hand, Comparative Example 2, with low softening point tackifiers resulted in poor high and low temperature performances. The addition of the functionalized metallocene catalyzed polyethylene in the adhesive significantly improved both high and low temperature performance.

## Claims

1. A hot melt adhesive composition comprising:
a) a metallocene catalyzed polyethylene copolymer, wherein the metallocene catalyzed polyethylene copolymer is an ethylene-octene copolymer with a melt index of 200 to 2000 g/10 min at 190°C, 2.16kg, measured in accordance with ASTM D1238;
b) 0.5 to 8 wt% of a functionalized metallocene catalyzed polyethylene copolymer, wherein the functional group is selected from acrylic acid, acetate, sulfonate, maleic anhydride, fumaric acid and citraconic anhydride; and wherein the melt index ranges from 200 to 2,000 g/10 min at 190°C, 2.16kg, measured in accordance with ASTM D1238;
c) greater than 22 wt% of a wax with a melting point ranging from 48.9 °C (120°F) to 121.1 °C (250°F), measured with a DSC; and
d) a tackifier with a Ring and Ball softening point of 80°C to 110°C;
wherein the wt% is based on the total weight of the adhesive.

2. The hot melt adhesive composition of claim 1, wherein the adhesive comprises a maleic anhydride functionalized metallocene catalyzed polyethylene copolymer, a fumaric acid modified metallocene catalyzed polyethylene copolymer, a citraconic anhydride modified metallocene catalyzed polyethylene copolymer or mixtures thereof.

3. The hot melt adhesive composition of claim 2, wherein the functionalized metallocene catalyzed polyethylene copolymer is maleic anhydride functionalized ethylene-octene copolymer with melt index of 200 to 2000 g/10 min at 190°C, 2.16kg, measured in accordance with ASTM D1238.

4. The hot melt adhesive composition of claim 1, wherein the wax is selected from the group consisting of paraffin, microcrystalline, polyethylene, by-product polyethylene, Fischer-Tropsch and mixtures thereof.

5. The hot melt adhesive composition of claim 1, wherein the tackifier is selected from the group consisting of aliphatic hydrocarbons, cycloaliphatic hydrocarbons, aromatic hydrocarbons, aromatically modified aliphatic hydrocarbons, cycloaliphatic hydrocarbons and mixtures thereof.

6. The hot melt adhesive composition according to any of claims 1 to 5, wherein
a) is present from 25 to 50 wt%;
and
d) is present from 20 to 45 wt%.

7. The hot melt adhesive composition of claim 6, wherein the adhesive comprises from 25 to 40 wt% of a wax.

8. The hot melt adhesive composition of claim 6, wherein the tackifier has a Ring and Ball softening point of 80 to 95°C.

9. A method of forming an article comprising the steps of
(1) applying the adhesive compositions of claim 6 onto at least a portion of a first substrate at a temperature of 162.8 to 204.4 °C (325-400°F);
(2) applying a second substrate onto the adhesive composition; and
(3) cooling the adhesive composition
thereby forming a bonded article.

10. An article comprising the adhesive composition of claim 6.

11. The article of claim 10 comprising virgin kraft, recycled kraft, high and low density kraft and/or chipboard.

12. The article of claim 11 which is a case, carton, tray or bag.

## Patentansprüche

1. Schmelzklebstoffzusammensetzung, umfassend:
a) ein durch Metallocen katalysiertes Polyethylencopolymer, wobei das durch Metallocen katalysierte Polyethylencopolymer ein Ethylen-Octen-Copolymer mit einem Schmelzindex von 200 bis 2.000 g/10 min bei 190 °C, 2,16 kg, gemessen nach ASTM D1238, ist;
b) 0,5 bis 8 Gew.-% eines funktionalisierten durch Metallocen katalysierten Polyethylencopolymers, wobei die funktionelle Gruppe ausgewählt ist aus Acrylsäure, Acetat, Sulfonat, Maleinsäureanhydrid, Fumarsäure und Citraconanhydrid; und wobei sich der Schmelzindex im Bereich von 200 bis 2.000 g/10 min bei 190 °C, 2,16 kg, gemessen nach ASTM D1238, befindet;
c) mehr als 22 Gew.-% eines Wachses mit einem Schmelzpunkt, der sich im Bereich von 48,9 °C (120 °F) bis 121,1 °C (250 °F), gemessen mit einem DSC, befindet; und
d) einen Klebrigmacher mit einem Erweichungspunkt Ring und Kugel von 80 °C bis 110 °C;
wobei sich die Gew.-% auf das Gesamtgewicht des Klebstoffs bezieht.

2. Die Schmelzklebstoffzusammensetzung nach Anspruch 1, wobei der Klebstoff ein mit Maleinsäureanhydrid funktionalisiertes durch Metallocen katalysiertes Polyethylencopolymer, ein mit Fumarsäure modifiziertes durch Metallocen katalysiertes Polyethylencopolymer, ein mit Citraconanhydrid modifiziertes durch Metallocen katalysiertes Polyethylencopolymer oder Mischungen davon umfasst.

3. Die Schmelzklebstoffzusammensetzung nach Anspruch 2, wobei das funktionalisierte durch Metallocen katalysierte Polyethylencopolymer ein mit Maleinsäureanhydrid funktionalisiertes Ethylen-Octen-Copolymer mit einem Schmelzindex von 200 bis 2.000 g/10 min bei 190 °C, 2,16 kg, gemessen nach ASTM D1238, ist.

4. Die Schmelzklebstoffzusammensetzung nach Anspruch 1, wobei das Wachs ausgewählt ist aus der Gruppe bestehend aus Paraffin, mikrokristallinem, Polyethylen, Nebenprodukt-Polyethylen, Fischer-Tropsch und Mischungen davon.

5. Die Schmelzklebstoffzusammensetzung nach Anspruch 1, wobei der Klebrigmacher ausgewählt ist aus der Gruppe bestehend aus aliphatischen Kohlenwasserstoffen, cycloaliphatischen Kohlenwasserstoffen, aromatischen Kohlenwasserstoffen, aromatisch modifizierten aliphatischen Kohlenwasserstoffen, cycloaliphatischen Kohlenwasserstoffen und Mischungen davon.

6. Die Schmelzklebstoffzusammensetzung nach einem der Ansprüche 1 bis 5, wobei
a) zu 25 bis 50 Gew.-% vorhanden ist;
und
d) zu 20 bis 45 Gew.-% vorhanden ist.

7. Die Schmelzklebstoffzusammensetzung nach Anspruch 6, wobei der Klebstoff 25 bis 40 Gew.-% eines Wachses umfasst.

8. Die Schmelzklebstoffzusammensetzung nach Anspruch 6, wobei der Klebrigmacher einen Erweichungspunkt Ring und Kugel von 80 bis 95 °C aufweist.

9. Verfahren zur Herstellung eines Gegenstandes, die folgenden Schritte umfassend:
(1) Aufbringen der Klebstoffzusammensetzungen nach Anspruch 6 auf mindestens einen Abschnitt eines ersten Substrats bei einer Temperatur von 162,8 bis 204,4 °C (325-400 °F);
(2) Aufbringen eines zweiten Substrats auf die Klebstoffzusammensetzung; und
(3) Kühlen der Klebstoffzusammensetzung,
wodurch ein verklebter Gegenstand ausgebildet wird.

10. Gegenstand, umfassend die Klebstoffzusammensetzung nach Anspruch 6.

11. Der Gegenstand nach Anspruch 10, umfassend Rohkraftkarton, Recyclingkraftkarton, Kraftkarton mit hoher und niedriger Dichte und/oder Graukarton.

12. Der Gegenstand nach Anspruch 11, bei dem es sich um eine Kiste, eine Schachtel, eine Schale oder einen Beutel handelt.

## Revendications

1. Composition adhésive thermofusible comprenant :
a) un copolymère de polyéthylène catalysé par un métallocène, dans laquelle le copolymère de polyéthylène catalysé par un métallocène est un copolymère d'éthylène-octène avec un indice de fusion compris entre 200 et 2 000 g/10 min à 190 °C, 2,16 kg, mesuré selon la norme ASTM D1238 ;
b) 0,5 à 8 % en poids d'un copolymère de polyéthylène catalysé par un métallocène fonctionnalisé, dans laquelle le groupe fonctionnel est sélectionné parmi l'acide acrylique, l'acétate, le sulfonate, l'anhydride maléique, l'acide fumarique et l'anhydride citraconique ; et dans laquelle l'indice de fusion est compris entre 200 et 2 000 g/10 min à 190 °C, 2,16 kg, mesuré selon la norme ASTM D1238;
c) plus de 22 % en poids d'une cire avec un point de fusion compris entre 48,9 °C (120 °F) et 121,1 °C (250 °F), mesuré à l'aide d'un calorimètre à balayage différentiel (DSC) ; et
d) un agent poisseux avec un point de ramollissement bille et anneau compris entre 80°Cet110°C;
dans laquelle le pourcentage en poids est basé sur le poids total de l'adhésif.

2. Composition adhésive thermofusible selon la revendication 1, dans laquelle l'adhésif comprend un copolymère de polyéthylène catalysé par un métallocène fonctionnalisé d'anhydride maléique, un copolymère de polyéthylène catalysé par un métallocène modifié d'acide fumarique, un copolymère de polyéthylène catalysé par un métallocène modifié d'anhydride citraconique ou des mélanges de ceux-ci.

3. Composition adhésive thermofusible selon la revendication 2, dans laquelle le copolymère de polyéthylène catalysé par un métallocène fonctionnalisé est un copolymère d'éthylène-octène fonctionnalisé d'anhydride maléique avec un indice de fusion compris entre 200 et 2 000 g/10 min à 190 °C, 2,16 kg, mesuré selon la norme ASTM D1238.

4. Composition adhésive thermofusible selon la revendication 1, dans laquelle la cire est sélectionnée parmi le groupe constitué de paraffine, de microcristalline, de polyéthylène, de polyéthylène dérivé, Fischer-Tropsch et des mélanges de ceux-ci.

5. Composition adhésive thermofusible selon la revendication 1, dans laquelle l'agent poisseux est sélectionné parmi le groupe constitué d'hydrocarbures aliphatiques, d'hydrocarbures cycloaliphatiques, d'hydrocarbures aromatiques, d'hydrocarbures aliphatiques aromatiquement modifiés, d'hydrocarbures cycloaliphatiques et des mélanges de ceux-ci.

6. Composition adhésive thermofusible selon l'une quelconque des revendications 1 à 5, dans laquelle
a) est présent entre 25 et 50 % en poids ;
et
d) est présent entre 20 et 45 % en poids.

7. Composition adhésive thermofusible selon la revendication 6, dans laquelle l'adhésif comprend entre 25 et 40 % en poids d'une cire.

8. Composition adhésive thermofusible selon la revendication 6, dans laquelle l'agent poisseux a un point de ramollissement bille et anneau compris entre 80 et 95 °C.

9. Procédé de formation d'un article comprenant les étapes
(1) d'application des compositions adhésives selon la revendication 6 sur au moins une partie d'un premier substrat à une température comprise entre 162,8 et 204,4 °C (325-400 °F) ;
(2) d'application d'un second substrat sur la composition adhésive ; et
(3) de refroidissement de la composition adhésive
formant ainsi un article lié.

10. Article comprenant la composition adhésive selon la revendication 6.

11. Article selon la revendication 10 comprenant du kraft vierge, du kraft recyclé, du kraft à haute et faible densité et/ou de l'aggloméré.

12. Article selon la revendication 11 qui est une caisse, un carton, un plateau ou un sac.
